(19) Europäisches Patentamt
European Patent Office
Office européen des brevets

(11) **EP 4 629 138 A1**

(12) **EUROPÄISCHE PATENTANMELDUNG**

(43) Veröffentlichungstag:
**08.10.2025  Patentblatt 2025/41**

(21) Anmeldenummer: **24168797.9**

(22) Anmeldetag: **05.04.2024**

(51) Internationale Patentklassifikation (IPC):
**G06N 3/0499** (2023.01)    **G06N 5/045** (2023.01)

(52) Gemeinsame Patentklassifikation (CPC):
**G06N 5/045; G06N 3/0499**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH**
**70442 Stuttgart (DE)**

(72) Erfinder:
• **Demir, Ozan**
  **73765 Neuhausen (DE)**
• **Groh, Konrad**
  **70193 Stuttgart (DE)**

Bemerkungen:
Geänderte Patentansprüche gemäss Regel 137(2) EPÜ.

(54) **VORRICHTUNG UND COMPUTERIMPLEMENTIERTES VERFAHREN ZUM BEREITSTELLEN VON INFOR-MATION ÜBER EINEN INTERNEN BETRIEBSZUSTAND EINES TECHNISCHEN SYSTEMS**

(57) Vorrichtung und computerimplementiertes Verfahren zum Bereitstellen (214) von Information über einen internen Betriebszustand eines technischen Systems (102), wobei das technische System (102) ein neuronales Netz (108) umfasst, wobei das neuronale Netz (108) eine Eingangsschicht zum Empfang der mehrdimensionalen Eingangsgröße (110) aus einem Eingangsraum und eine Schicht zum Ausgeben einer Größe, insbesondere der Ausgangsgröße des neuronalen Netzes (108) oder eines Merkmals einer vorletzten Schicht des neuronalen Netzes (108), umfasst, wobei das neuronale Netz (108) dazu eingerichtet ist, die mehrdimensionale Eingangsgröße (110) auf die Größe abzubilden, wobei das Verfahren ein Bestimmen von wenigstens einem Punkt im Eingangsraum umfasst, der vom neuronalen Netz (108) auf einen maximalen Wert der Größe abgebildet wird, wobei das Verfahren ein Bestimmen von wenigstens einem Punkt im Eingangsraum umfasst, der vom neuronalen Netz (108) auf einen minimalen Wert der Größe abgebildet wird, wobei ein Zwischenwert der Größe bereitgestellt wird, der größer als der minimale Wert und kleiner als der maximale Wert der Größe ist, wobei eine Menge bestimmt wird, die wenigstens eine mehrdimensionale Eingangsgröße (110) des neuronalen Netzes (108), die das neuronale Netz (108) auf den Zwischenwert abbildet, umfasst, und wobei die Information über den internen Betriebszustand, insbesondere zur Anpassung eines Verhaltens des neuronalen Netzes (108), abhängig von der wenigstens einen mehrdimensionalen Eingangsgröße (110) aus der Menge bestimmt wird.

Fig. 1

EP 4 629 138 A1

**Beschreibung**

Stand der Technik

Die Erfindung geht von einer Vorrichtung und einem computerimplementierten Verfahren zum Bereitstellen von Information über einen internen Betriebszustand eines technischen Systems aus.

Ein Modell, das eine Look-Up-Table benutzt, ermöglicht es einem Nutzer, ein Verhalten eines durch das Modell angesteuerten technischen Systems, einfach durch die Änderung eines Parameters nachvollziehbar zu ändern. Bei einer Applikation oder Freigabe eines technischen Systems, das von einem neuronalen Netz angesteuert wird, ist es im Gegensatz dazu nicht möglich, direkt ein bestimmtes Ausgabeverhalten ins Netz einzuprägen.

Offenbarung der Erfindung

Das computerimplementierte Verfahren zum Bereitstellen von Information über einen internen Betriebszustand eines technischen Systems sieht vor, dass das technische System ein neuronales Netz umfasst, wobei das neuronale Netz eine Eingangsschicht zum Empfang der mehrdimensionalen Eingangsgröße aus einem Eingangsraum und eine Schicht zum Ausgeben einer Größe, insbesondere der Ausgangsgröße des neuronalen Netzes oder eines Merkmals einer vorletzten Schicht des neuronalen Netzes, umfasst, wobei das neuronale Netz dazu eingerichtet ist, die mehrdimensionale Eingangsgröße auf die Größe abzubilden, wobei das Verfahren ein Bestimmen von wenigstens einem Punkt im Eingangsraum umfasst, der vom neuronalen Netz auf einen maximalen Wert der Größe abgebildet wird, wobei das Verfahren ein Bestimmen von wenigstens einem Punkt im Eingangsraum umfasst, der vom neuronalen Netz auf einen minimalen Wert der Größe abgebildet wird, wobei ein Zwischenwert der Größe bereitgestellt wird, der größer als der minimale Wert und kleiner als der maximale Wert der Größe ist, wobei eine Menge bestimmt wird, die wenigstens eine mehrdimensionale Eingangsgröße des neuronalen Netzes, die das neuronale Netz auf den Zwischenwert abbildet, umfasst, und wobei die Information über den internen Betriebszustand, insbesondere zur Anpassung eines Verhaltens des Netzes, abhängig von der wenigstens einen mehrdimensionalen Eingangsgröße aus der Menge bestimmt wird. Wenn als Größe die Ausgangsgröße verwendet wird, gibt die Information über den internen Betriebszustand die Eingangs-/Ausgangsbeziehung des Netzes durch Bestimmung der Punkte, d.h., Levelsets des Netzes, wieder. Wenn als Größe die vorletzte Schicht verwendet wird, gibt die Information über den internen Betriebszustand die Eingangs-/Featurebeziehung des Netzes durch Bestimmung der Punkte, d.h., Levelsetzs des Netztes, wieder.

Durch eine von einem Nutzer vorgenommene manuelle Änderung der Gewichte oder durch eine Eingabe wie die Eingangs-/Ausgangsbeziehung oder die Eingangs-/Featurebeziehung geändert werden soll, und anschließende Anzeige der neuen Levelsets kann das Verhalten des Netzes in für den Nutzer nachvollziehbarer Weise eingeprägt werden.

Beispielsweise ist vorgesehen, dass das neuronale Netz dazu eingerichtet ist, eine Klassifikation einer Betriebsgröße des technischen Systems durchzuführen, wobei die mehrdimensionale Eingangsgröße wenigstens einen Wert der Betriebsgröße umfasst oder repräsentiert, und wobei die Ausgangsgröße das Ergebnis der Klassifikation der Betriebsgröße umfasst, oder wobei das neuronale Netz dazu eingerichtet ist, eine Klassifikation eines Sensorsignals durchzuführen, wobei die mehrdimensionale Eingangsgröße wenigstens einen Wert des Sensorsignals umfasst oder repräsentiert, und wobei die Ausgangsgröße das Ergebnis der Klassifikation des Sensorsignals umfasst, oder wobei das neuronale Netz dazu eingerichtet ist, basierend auf einer Betriebsgröße des technischen Systems eine Regression durchzuführen, wobei die mehrdimensionale Eingangsgröße wenigstens einen Wert der Betriebsgröße umfasst oder repräsentiert, wobei die Ausgangsgröße des neuronalen Netzes das Ergebnis der Regression umfasst, oder wobei das neuronale Netz dazu eingerichtet ist, basierend auf einem Sensorsignal eine Regression durchzuführen, wobei die mehrdimensionale Eingangsgröße wenigstens einen Wert des Sensorsignals umfasst oder repräsentiert, wobei die Ausgangsgröße des neuronalen Netzes das Ergebnis der Regression umfasst.

Beispielsweise ist vorgesehen, dass die Betriebsgröße oder das Sensorsignal empfangen oder von einem Sensor erfasst wird.

Beispielsweise ist vorgesehen, dass die Betriebsgröße oder das Sensorsignal eine Geschwindigkeit, eine Drehrate, eine Temperatur, eine Stromstärke, eine Stromspannung, einen Druck, einen Luftdruck, eine Verformung, einen Fluss einer Flüssigkeit oder eines Gases, oder eine Zusammensetzung eines Gases, oder eine Änderung einer Geschwindigkeit, einer Drehrate, einer Temperatur, einer Stromstärke, einer Stromspannung, eines Drucks, eines Luftdrucks, einer Verformung, eines Flusses einer Flüssigkeit oder eines Gases, oder einer Zusammensetzung eines Gases charakterisiert.

Beispielsweise wird das technische System abhängig von einer Ausgangsgröße des neuronalen Netzes, die das neuronale Netz für eine mehrdimensionale Eingangsgröße ausgibt, gesteuert.

Beispielsweise ist vorgesehen, dass abhängig von der wenigstens einen mehrdimensionalen Eingangsgröße aus der Menge eine graphische Darstellung des internen Betriebszustandes bestimmt wird. Die graphische Darstellung visualisiert die Eingangs-/Ausgangsbeziehung oder die Eingangs-/Featurebeziehung und ermöglicht dem Nutzer dadurch die Wahrnehmung des internen Betriebszustandes und die Anpassung des Netzes.

Beispielsweise ist vorgesehen, dass abhängig von mehreren der mehrdimensionalen Eingangsgröße aus der Menge eine Punktemenge bestimmt wird, die in der graphischen Darstellung die mehreren mehrdimensionalen Eingangsgrößen, die das neuronale Netz auf den Zwischenwert abbildet repräsentiert.

Beispielsweise ist vorgesehen, dass abhängig von mehreren der mehrdimensionalen Eingangsgröße aus der Menge eine Linie bestimmt wird, die in der graphischen Darstellung Punkte verbindet, die die mehreren mehrdimensionalen Eingangsgrößen repräsentieren, die das neuronale Netz auf den Zwischenwert abbildet.

Beispielsweise ist vorgesehen, dass abhängig von mehreren der mehrdimensionalen Eingangsgrößen aus der Menge ein Wert zur Darstellung des internen Betriebszustandes bestimmt wird, insbesondere ein Volumen, eine Oberfläche, oder eine maximale Schnittkrümmung.

Beispielsweise ist vorgesehen, dass mehrere Zwischenwerte vorgegeben und je Zwischenwert eine Menge bestimmt wird, die jeweils wenigstens eine mehrdimensionale Eingangsgröße umfasst, die das neuronale Netz auf den jeweiligen Zwischenwert abbildet, wobei je Menge eine Information über den internen Betriebszustand, insbesondere zur Anpassung eines Verhaltens des Netzes, abhängig von der wenigstens einen mehrdimensionalen Eingangsgröße aus der jeweiligen Menge bestimmt wird.

Eine Vorrichtung zum Bereitstellen von Information über einen internen Betriebszustand eines technischen Systems umfasst wenigsten einen Prozessor und wenigstens einen Speicher, insbesondere wenigstens einen nicht-flüchtigen Speicher, wobei der wenigstens eine Speicher vom wenigstens einen Prozessor ausführbare Instruktionen umfasst, bei deren Ausführung durch den wenigstens einen Prozessor die Vorrichtung das Verfahren nach einem der vorherigen Ansprüche ausführt.

Weitere vorteilhafte Ausführungsformen sind der folgenden Beschreibung und der Zeichnung entnehmbar. In der Zeichnung zeigt:

Fig. 1 eine schematische Darstellung einer Vorrichtung zum Bereitstellen von Information über einen internen Betriebszustand eines technischen Systems,

Fig. 2 ein Flussdiagramm mit Schritten eines Verfahren zum Bereitstellen von Information über den internen Betriebszustand des technischen Systems,

Fig. 3 eine beispielhafte graphische Darstellung des internen Betriebszustandes abhängig von zwei Eingangsgrößen des technischen Systems,

Fig. 4 eine beispielhafte graphische Darstellung eines Beitrags einer ersten internen Größe des technischen Systems zum internen Betriebszustand vor einer Anpassung eines Verhaltens des technischen Systems,

Fig. 5 eine beispielhafte graphische Darstellung eines Beitrags einer zweiten internen Größe des technischen Systems zum internen Betriebszustand vor der Anpassung,

Fig. 6 eine beispielhafte graphische Darstellung eines Beitrags einer dritten internen Größe des technischen Systems zum internen Betriebszustand vor der Anpassung,

Fig. 7 eine beispielhafte graphische Darstellung eines Beitrags einer vierten internen Größe des technischen Systems zum internen Betriebszustand vor der Anpassung,

Fig. 8 eine beispielhafte graphische Darstellung eines Beitrags der ersten internen Größe zum internen Betriebszustand nach der Anpassung mit einem ersten Faktor,

Fig. 9 eine beispielhafte graphische Darstellung eines Beitrags der ersten internen Größe des technischen Systems zum internen Betriebszustand nach der Anpassung mit einem zweiten Faktor,

Fig. 10 eine beispielhafte graphische Darstellung eines Beitrags der ersten internen Größe des technischen Systems zum internen Betriebszustand nach der Anpassung mit einem dritten Faktor.

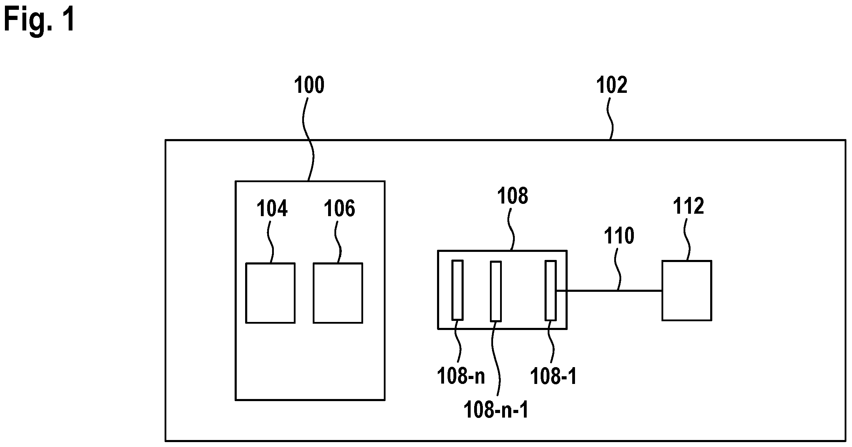

In Figur 1 ist eine Vorrichtung 100 zum Bereitstellen von Information über einen internen Betriebszustand eines technischen Systems 102 schematisch dargestellt.

Die Vorrichtung 100 umfasst wenigsten einen Prozessor 104 und wenigstens einen Speicher 106. Der wenigstens eine Speicher 106 umfasst z.B. wenigstens einen nicht-flüchtigen Speicher.

Der wenigstens eine Speicher 106 umfasst vom wenigstens einen Prozessor 104 ausführbare Instruktionen, bei deren Ausführung durch den wenigstens einen Prozessor 104 die Vorrichtung 100 ein im Folgenden beschriebenes Verfahren zum Bereitstellen von Information über den internen Betriebszustand des technischen Systems 102 ausführt.

Das technische System 102 umfasst ein neuronales Netz 108. Das neuronale Netz 108 umfasst einen Eingangsschicht 108-1 für eine mehrdimensionale Eingangsgröße 110 aus einem Eingangsraum. Das neuronale Netz 108 umfasst eine Ausgangsschicht 108-n für eine Ausgangsgröße. Das neuronale Netz 108 umfasst eine vorletzte Schicht 108-n-1 vor der Ausgangsschicht 108-n. Die vorletzte Schicht 108-n-1 umfasst ein Merkmal des neuronalen Netzes. Das neuronale Netz 108 umfasst z.B. n=3 Schichten. Das neuronale Netz 108 kann mehr als drei Schichten umfassen, z.B. n=4 oder n=5 oder n=6 Schichten. Das neuronale Netz 108 kann mehr als sechs Schichten umfassen.

Beispielsweise umfasst das mehrschichtige neuronale Netz 108 mit ReLu-Nichtlinearitäten, d.h. das neuronale Netz 108 definiert eine Funktion

$$F\colon \mathbb{R}^{m_1} \to \mathbb{R}^{m_{k+1}}$$

$$F(x) = A^k\Phi\big(A^{k-1}\Phi\big(A^{k-2}\ldots\Phi\big(A^2(\Phi(A^1 x + b^1)) + b^2\big) + \cdots\big) + b^k$$

mit einer ReLu-Nichtlinearität $\Phi$, mit Gewichtsmatrizen $A^1, \ldots, A^k$ und Bias-Termen $b^1, \ldots, b^k$. Die Gewichtsmatrizen $A^1, \ldots,$ $A^k$ sind lineare Abbildungen $A^1\colon \mathbb{R}^{m_1} \to \mathbb{R}^{m_2}, A^2\colon \mathbb{R}^{m_2} \to \mathbb{R}^{m_3}, \ldots, A^k\colon \mathbb{R}^{m_k} \to \mathbb{R}^{m_{k+1}}$. Die Bias-Terme $b^1, \ldots,$ $b^k$ sind Vektoren eines reellen Vektorraums. Die Funktion $F$ ist eine verkettete Abbildung $F\colon \mathbb{R}^{m_1} \to \mathbb{R}^{m_{k+1}}$ des $m_1$-dimensionalen euklidischen Raumes $\mathbb{R}^{m_1}$ in den $m_{1+1}$ dimensionalen euklidischen Raum $\mathbb{R}^{m_{1+1}}$

Das neuronale Netz 108 umfasst eine Schicht zum Ausgeben einer Größe zur Bestimmung der Information über den internen Betriebszustand des technischen Systems 102. Es kann vorgesehen sein, dass die Schicht zum Ausgeben der Größe die Ausgangsschicht 108-n oder die vorletzte Schicht 108-n-1 ist. Das neuronale Netz 108 ist dazu eingerichtet, die mehrdimensionale Eingangsgröße 110 auf die Größe abzubilden.

Die mehrdimensionale Eingangsgröße 110 umfasst z.B. wenigstens einen Wert einer Betriebsgröße des technischen Systems 102 oder eines Sensorsignals. Im Beispiel umfasst das technische System 102 einen Sensor 112, der ausgebildet ist, das Sensorsignal zu erfassen.

Das neuronale Netz 108 kann dazu eingerichtet sein, eine Klassifikation der Betriebsgröße des technischen Systems 102 durchzuführen. Zur Klassifikation der Betriebsgröße kann die mehrdimensionale Eingangsgröße 110 wenigstens einen Wert der Betriebsgröße, die klassifiziert werden soll, umfassen oder repräsentieren. Die Ausgangsgröße umfasst z.B. das Ergebnis der Klassifikation der Betriebsgröße.

Das neuronale Netz 108 kann dazu eingerichtet sein, eine Klassifikation des Sensorsignals durchzuführen. Zur Klassifikation des Sensorsignals kann die mehrdimensionale Eingangsgröße 110 wenigstens einen Wert des Sensorsignals umfassen oder repräsentieren. Die Ausgangsgröße umfasst z.B. das Ergebnis der Klassifikation des Sensorsignals.

Zur Klassifikation gibt das neuronale Netz 108 für die mehrdimensionale Eingangsgröße $x$ den Ausgangswert $F$ ($x$) einer Softmaxfunktion aus. Durch die Softmaxfunktion sind die Komponenten $f_1(x), f_2(x), \ldots, f_{mk+1}(x)$ der Ausgabe $F(x) = (f_1(x), f_2(x), \ldots, f_{mk+1}(x))$ des neuronalen Netzes 108 positiv und auf Eins normiert, d.h. für alle mehrdimensionale Eingangsgrößen x gilt

$$f_1(x), f_2(x), \ldots, f_{m_{k+1}}(x) \geq 0 \text{ und } f_1(x) + f_2(x) + \ldots, + f_{m_{k+1}}(x) = 1.$$

Die Komponenten $f_1(x), f_2(x), \ldots, f_{mk+1}(x)$ repräsentieren jeweils eine Klasse. Die Klassifikation erfolgt im Beispiel durch Bestimmen der maximalen Komponente $f_1(x), f_2(x), \ldots, f_{mk+1}(x)$, wobei die maximale Komponente die Klasse repräsentiert, in die die mehrdimensionale Eingangsgrößen $x$ klassifiziert wird.

Das neuronale Netz 108 kann dazu eingerichtet sein, basierend auf der Betriebsgröße des technischen Systems 102 eine Regression durchzuführen.

Zur Regression basierend auf der Betriebsgröße kann die mehrdimensionale Eingangsgröße 110 wenigstens einen Wert der Betriebsgröße umfassen oder repräsentieren. Die Ausgangsgröße des neuronalen Netzes 108 umfasst z.B. das Ergebnis der Regression basierend auf der Betriebsgröße.

Das neuronale Netz 108 kann dazu eingerichtet sein, basierend auf dem Sensorsignal eine Regression durchzuführen. Zur Regression basierend auf dem Sensorsignal kann die mehrdimensionale Eingangsgröße 110 wenigstens einen Wert des Sensorsignals umfassen oder repräsentieren. Die Ausgangsgröße des neuronalen Netzes 108 umfasst z.B. das Ergebnis der Regression basierend auf dem Sensorsignals.

Zur Regression gibt das neuronale Netz 108 für die mehrdimensionale Eingangsgröße $x$ den Regressionswert $F$ ($x$) aus.

Die Betriebsgröße oder das Sensorsignal können eine Geschwindigkeit, eine Drehrate, eine Temperatur, eine Stromstärke, eine Stromspannung, einen Druck, einen Luftdruck, eine Verformung, einen Fluss einer Flüssigkeit oder eines Gases, oder eine Zusammensetzung eines Gases charakterisieren.

Die Betriebsgröße oder das Sensorsignal können eine Änderung einer Geschwindigkeit, einer Drehrate, einer Temperatur, einer Stromstärke, einer Stromspannung, eines Drucks, eines Luftdrucks, einer Verformung, eines Flusses einer Flüssigkeit oder eines Gases, oder einer Zusammensetzung eines Gases charakterisieren.

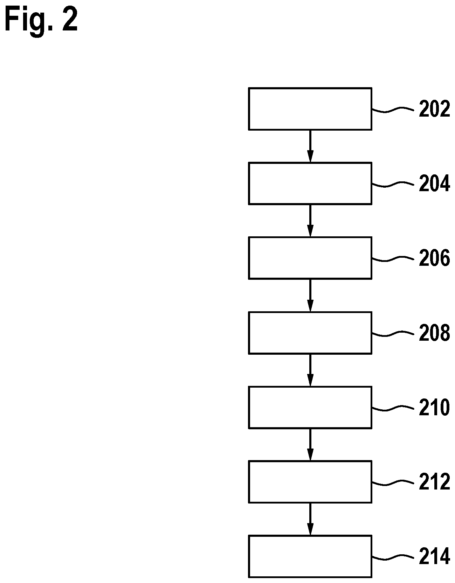

Figur 2 stellt ein Flussdiagramm mit Schritten des Verfahrens dar.

Das Verfahren wird insbesondere zur Anpassung eines Verhaltens des neuronalen Netzes 108 ausgeführt.

Das Verfahren umfasst einen Schritt 202.

Im Schritt 202 wird die mehrdimensionale Eingangsgröße 110 bereitgestellt.

Es kann vorgesehen sein, dass die Betriebsgröße oder das Sensorsignal empfangen oder vom Sensor 112 erfasst wird.

Zur Klassifikation der Betriebsgröße oder zur Regression basierend auf der Betriebsgröße kann vorgesehen sein, dass wenigstens ein Wert der mehrdimensionalen Eingangsgröße 110 bestimmt wird, der einen Wert der empfangenen oder erfassten Betriebsgröße charakterisiert.

Zur Klassifikation des Sensorsignals oder zur Regression basierend auf dem Sensorsignal kann vorgesehen sein, dass wenigstens ein Wert der mehrdimensionalen Eingangsgröße 110 bestimmt wird, der einen Wert der empfangenen oder erfassten Betriebsgröße charakterisiert.

Es kann vorgesehen sein, dass das technische System 102 abhängig von einer Ausgangsgröße des neuronalen Netzes 108, die das neuronale Netz 108 für die mehrdimensionale Eingangsgröße ausgibt, gesteuert wird.

Das Verfahren umfasst einen Schritt 204.

Im Schritt 204 wird wenigstens ein Punkt im Eingangsraum bestimmt, der vom neuronalen Netz 108 auf einen maximalen Wert der Größe abgebildet wird.

Das Verfahren umfasst einen Schritt 206.

Im Schritt 206 wird wenigstens einem Punkt im Eingangsraum bestimmt, der vom neuronalen Netz 108 auf einen minimalen Wert der Größe abgebildet wird.

Die Bestimmung des maximalen Werts oder des minimalen Werts der Größe basiert im Beispiel auf einer Partitionierung des Eingangsraums des neuronalen Netzes 108. Die Schichten des neuronalen Netzes 108 partitionieren den Eingangsraum in Zellen, d.h., Faces.

Ein Face umfasst einen einzelnen Punkt oder eine Punktemenge. Ein einzelner Punkt im Eingangsraum repräsentiert eine Menge, die genau einen Punkt umfasst.

Beim Partitionieren sind die erste Schicht, eine mittlere Schicht oder mehrere mittlere Schichten, und die letzte Schicht des neuronalen Netzes 108 zu unterscheiden.

1. Schicht:

Die erste Schicht des neuronalen Netzes 108 umfasst die Gewichtsmatrix $A^1$ und den Bias-Term $b^1$ und eine ReLu-Nichtlinearität. Das bedeutet, eine Größe $y^1$ am Ausgang der ersten Schicht ist

$$y^1 = \Phi(A^1 x + b^1) = \Phi([h_1, \dots, h_m] x + b^1)$$

mit

$$h_1 = \begin{bmatrix} a_{11}^1 \\ a_{12}^1 \\ \cdots \\ a_{1d}^1 \end{bmatrix}, \dots, h_m = \begin{bmatrix} a_{m1}^1 \\ a_{m2}^1 \\ \cdots \\ a_{md}^1 \end{bmatrix}, x = \begin{bmatrix} x_1 \\ x_2 \\ \cdots \\ x_d \end{bmatrix}, b^1 = \begin{bmatrix} b_1^1 \\ b_2^1 \\ \cdots \\ b_m^1 \end{bmatrix}$$

Das Partitionieren durch die 1. Schicht basiert auf offenen Halbräumen

$$H_1^- := \{x \in \mathbb{R}^{m_1} | \langle h_1, x \rangle + b_1^1 < 0\}, \dots, H_m^- := \{x \in \mathbb{R}^{m_1} | \langle h_m, x \rangle + b_m^1 < 0\}$$

$$H_1^+ := \{x \in \mathbb{R}^{m_1} | \langle h_1, x \rangle + b_1^1 > 0\}, \dots, H_m^+ := \{x \in \mathbb{R}^{m_1} | \langle h_m, x \rangle + b_m^1 > 0\}$$

und Hyperebenen

$$H_1^0 := \{x \in \mathbb{R}^{m_1} | \langle h_1, x \rangle + b_1^1 = 0\}, \dots, H_m^0 := \{x \in \mathbb{R}^{m_1} | \langle h_m, x \rangle + b_m^1 = 0\}$$

Beispielsweise wird durch das Partitionieren, jedem Element der mehrdimensionalen Eingangsgröße $x \in \mathbb{R}^{m_1}$ eine Codierung $code(x) \in \{-1,0,1\}^m$ zugeordnet, wobei an der k-ten Stelle der mehrdimensionalen Eingangsgröße *x* -1 eingesetzt wird, wenn $\langle h_1, x \rangle + b_1^1 < 0$ , wobei an der k-ten Stelle der mehrdimensionalen Eingangsgröße *x* +1 eingesetzt wird, wenn $\langle h_1, x \rangle + b_1^1 > 0$ , und wobei an der k-ten Stelle der mehrdimensionalen Eingangsgröße *x* 0 eingesetzt wird, wenn $\langle h_1, x \rangle + b_1^1 = 0$ .

In dieser Art und Weise ist jedes Element der mehrdimensionalen Eingangsgrö-ße *x* durch einen Code in eindeutiger Weise zugeordnet.

Das Partitionieren durch die 1. Schicht erzeugt im Beispiel die Hyperebenen $H_1^0$ , $H_2^0, \ldots, H_m^0$ Die Hyperebenen $H_1^0, H_2^0, \ldots, H_m^0$ partitionieren den Eingangsraum in n-dimensionale Zellen, d.h., n-Faces.

n-Faces:

Die n-Faces sind die Zusammenhangskomponenten des Komplements der Vereinigung der Hyperebenen $H_1^0, H_2^0, \ldots, H_m^0$ .

In einem Beispiel für m=2 werden durch die Partitionierung drei Hyperebenen $H_1^0$ , $H_2^0, H_3^0$ bestimmt, die den Eingangsraum Partitionieren. Auf Basis der drei Hyperebenen $H_1^0, H_2^0, H_3^0$ werden sieben 2-Faces bestimmt. Die sieben 2-Faces stellen sieben zweidimensionale offene Mengen im Eingangsraum dar.

(n-1)-Faces:

Der Zusammenhangskomponenten des Randes der n-Faces sind die (n-1)-Faces. Im Beispiel für m=2 werden für die sieben 2-Faces neun 1-Faces bestimmt. Die neun 1-Faces stellen neun eindimensionale relativ-offene Mengen im Eingangsraum dar.

k-Faces:

Rekursiv werden k-Faces als Rand von k+1-Faces bestimmt, bis am Ende 0-Faces entstehen. Die 0-Faces sind null-dimensionale Mengen, d.h., Punkte, des Eingangsraums.

Im Beispiel für m=2 werden drei Punkte als 0-Faces bestimmt.

In jedem n-Face wird der Ausgang der ersten Schicht des neuronalen Netzes 108 als lineare Abbildung aufgefasst.

Von k-Schicht zu (k+1)-Schicht partitioniert jede weitere Schicht des neuronalen Netzes 108 die durch die vorherigen Schichten erzeugten n-Faces weiter. Hierbei wird jedes n-Face einzeln betrachtet.

Die letzte Schicht wird für die Regression anders als für die Klassifikation zur Partitionierung verwendet.

Letzte Schicht - Regression:

Im Falle einer Regression ist die letzte Schicht eine lineare Abbildung des Ausgangs der vorletzten Schicht. Es erfolgt keine weitere Partitionierung des Eingangsraums.

Letzte Schicht - Klassifikation:

In den vorherigen Schritten zur Partitionierung wurden Partitionen $P_k$ des Eingangraums in n-Faces, (n-1)-Faces, ..., und 0-Faces, d.h. Mengen von Punkten des Eingangsraums, erzeugt. Die n-Faces werden durch die letzte Schicht partitioniert, wobei alle n-Faces durchlaufen und folgende Schritte durchgeführt werden:

1. Bestimmen eines Matrix-Vektor Paars *L*, *l*, welches den linearen Zusammenhang im n-Face beschreibt.

Das Matrix-Vektor Paar *L, l* z.B. wie folgt bestimmt:

a. Es wird ein innerer Punkt *x̌* des n-Face bestimmt. Das n-Face umfasst im Beispiel Vertices des n-Faces. Der innere

Punkt $\breve{x}$ wird z.B. bestimmt indem ein Mittelpunkt der Vertices des n-Faces gebildet wird.

b. Für die Schichten des neuronalen Netzes 108 werden die aktiven Merkmale der jeweiligen Schicht, und iterativ die lineare Abbildung und der Bias-Term der Schicht bestimmt, d.h.:

i. Bilden von $A^1\breve{x} + b^1$.
ii. Bestimmen der Zeilen, bei denen der Vektor $A^1\breve{x} + b^1$ negativ ist.
iii. Bestimmen eines neuen Matrix-Vektor-Paares $\tilde{A}^1$, $\tilde{b}^1$, wobei $\tilde{A}^1$ der Matrix $A^1$ entspricht, nur das an den Zeilen, an denen der Vektor $A^1\breve{x} + b^1$ negativ war, die Zeilen von $\tilde{A}^1$ auf Null gesetzt werden.

In dieser Art und Weise gilt für einen Punkt x: $\phi(A^1\breve{x} + b^1)=\tilde{A}^1\breve{x} + \tilde{b}^1$.

iv. Bilden von $A^2\phi(A^1\breve{x} + b^1) + b^2$
v. Bestimmen der Zeilen, bei denen der Vektor $A^2\phi(A^1\breve{x} + b^1) + b^2$ negativ ist.
vi. Bestimmen eines neuen Matrix-Vektor-Paares $\tilde{A}^2$, $\tilde{b}^2$, wobei $\tilde{A}^2$ der Matrix $A^2$ entspricht, nur das an den Zeilen, an denen der Vektor $A^2\phi(A^1\breve{x} + b^1) + b^2$ negativ war, die Zeilen von $\tilde{A}^2$ auf Null gesetzt werden.

Für die anderen Schichten des neuronalen Netzes 108 wird basierend auf dem Vektor $A^k\phi(...(A^2\phi(A^1\breve{x} + b^1) + b^2) + \cdots) + b^k$ entsprechend verfahren.

vii. Bestimmen des Matrix-Vektor Paars $L$, $l$, so das in einer untersuchten Zelle gilt:

$$Lx + l = A^k\phi(A^{k-1}\Phi(A^{k-2} ... \Phi(A^2\phi(A^1\breve{x} + b^1) + b^2) + \cdots) ... ) + b^k$$

2. Bestimmen eines Matrix-Vektor-Paars ($H$,$d$)
Das Matrix-Vektor-Paar ($H$,$d$) wird abhängig vom Matrix-Vektor-Paar $L$, $l$ bestimmt.
Beispielsweise wird für eine Anzahl $c$ an Klassen, die die Klassifikation vorsieht, das Matrix-Vektor-Paar ($H$,$d$) in folgender Weise bestimmt:
Bereitstellen einer mit Nullen initialisierten Matrix $H$ der Größe ($0.5 * c * (c - 1)$), und eines mit Nullen initialisierten Vektors $d$ der Länge $0.5 * c * (c - 1)$).
b. Durchlaufen der Kombinationen aus zwei Elementen $i, j$ der möglichen Klassen, wobei je Kombination $i, j$ die Differenz des i-ten Spaltenvektors vom j-ten Spaltenvektor von $L$, und die Differenz des i-ten Eintrags des Bias $b^k$ vom j-ten Eintrag des Bias $b^k$ bestimmt werden.
Das bedeutet z.B., für zwei Klassen 1,2 wird eine mögliche Kombination (1,2) durchlaufen, für drei Klassen 1,2,3 werden drei mögliche Kombinationen (1,2), (1,3), (2,3) durchlaufen, für vier Klassen 1,2,3,4 werden es sechs mögliche Kombinationen (1,2), (1,3), (1,4), (2,3),(2,4), (3,4) durchlaufen.
3. Partitionieren des n-Face durch die Matrix $H$ und Bias $b^k$.
Durch diese Art der Konstruktion wird die durch das neuronale Netz 108 bestimmte Klasse konstant. Die Matrix H und der Bias $b^k$ identifizieren diejenigen Stellen des Eingangsraums in denen F(x) zwei Komponenten gleicher Größe besitzt, dies sind die Klassengrenzen des neuronalen Netzes 108.
Zur Bestimmung der Eingangswerte im Eingangsraum die vom neuronalen Netz 108 auf dasselbe Merkmal der vorletzten Schicht des neuronalen Netzes 108 abgebildet werden, wird im Beispiel der Eingangsraum des neuronalen Netzes 108 wie beschrieben in Mengen der mehrdimensionalen Eingangsgröße partitioniert, die jeweils vom neuronalen Netz 108 auf einen der Menge zugeordneten Wert abgebildet werden.
Zur Bestimmung der Eingangswerte im Eingangsraum die vom neuronalen Netz 108 auf dieselbe Ausgangsgröße des neuronalen Netzes 108 abgebildet werden, wird im Beispiel das neuronalen Netz 108 zur Klassifikation um eine weitere Schicht nach der letzten Schicht des neuronalen Netzes 108 zu einem angepassten Klassifikationsnetz erweitert.
Die Gewichtsmatrix der weiteren Schicht ist durch einen Vektor von Einsen definiert, d.h. einen Vektor, der für jedes Levelset eine Eins umfasst: A=[1,...,1].
Der Bias der weiteren Schicht ist ein Vektor, der einen Wert oder Werte umfasst, auf die das neuronale Netz 108 die Eingangswerte aus einer dem Wert bzw. dem jeweiligen Wert zugeordneten Partition des Eingangsraums abbildet.
Beispielsweise ist der Bias b für zehn Werte $c_1$, ..., $c_{10}$ ein Vektor: $b = -[c_1, ... , c_{10}]$.
Das Verfahren umfasst einen Schritt 208.
Im Schritt 208 wird wenigstens wobei ein Zwischenwert der Größe bereitgestellt, der größer als der minimale Wert und kleiner als der maximale Wert der Größe ist.
Der Zwischenwert wird z.B. von einem Nutzer vorgegeben. Es kann vorgesehen sein, dass der Zwischenwert in Äquidistanz zum minimalen und zum maximalen Wert bereitgestellt wird. Es kann vorgesehen sein, dass mehrere Zwischenwerte bereitgestellt werden. Es kann vorgesehen sein, die mehreren Zwischenwerte äquidistant zwischen dem maximalen und dem minimalen Wert vorzugeben.

Das Verfahren umfasst einen Schritt 210.

Im Schritt 210 wird eine Menge bestimmt, die wenigstens eine mehrdimensionale Eingangsgröße 110 des neuronalen Netzes 108 umfasst, die das neuronale Netz 108 auf den Zwischenwert abbildet.

Es kann vorgesehen sein, dass mehrere Zwischenwerte vorgegeben werden. Für die mehreren Zwischenwerte wird z.B. je Zwischenwert eine Menge bestimmt, die jeweils wenigstens eine mehrdimensionale Eingangsgröße umfasst, die das neuronale Netz 108 auf den jeweiligen Zwischenwert abbildet.

Das Verfahren umfasst einen Schritt 212.

Im Schritt 212 wird die Information über den internen Betriebszustand abhängig von der wenigstens einen mehrdimensionalen Eingangsgröße 110 aus der Menge oder aus den Mengen bestimmt.

Beispielsweise wird für einen Zwischenwert abhängig von der wenigstens einen mehrdimensionalen Eingangsgröße 110 aus der für den Zwischenwert bestimmten Menge eine graphische Darstellung des internen Betriebszustandes bestimmt.

Beispielsweise wird für einen Zwischenwert abhängig von mehreren der mehrdimensionalen Eingangsgröße 110 aus der für den Zwischenwert bestimmten Menge eine Punktemenge bestimmt, die in der graphischen Darstellung die mehreren mehrdimensionalen Eingangsgrößen, die das neuronale Netz 108 auf den Zwischenwert abbildet, repräsentiert. In der Punktemenge repräsentiert ein Punkt eine der mehrdimensionalen Eingangsgrößen 110.

Beispielsweise wird für einen Zwischenwert abhängig von mehreren der mehrdimensionalen Eingangsgröße 110 aus der für den Zwischenwert bestimmten Menge eine Linie bestimmt, die in der graphischen Darstellung Punkte verbindet, die die mehreren mehrdimensionalen Eingangsgrößen repräsentieren, die das neuronale Netz 108 auf den Zwischenwert abbildet. In der Linie repräsentiert ein Punkt der Linie eine der mehrdimensionalen Eingangsgrößen 110.

Beispielsweise wird für einen Zwischenwert abhängig von mehreren der mehrdimensionalen Eingangsgröße 110 aus der für den Zwischenwert bestimmten

Menge eine Wert zur Darstellung des internen Betriebszustandes bestimmt, insbesondere ein Volumen, eine Oberfläche, oder eine maximale Schnittkrümmung. Der Wert repräsentiert mehrdimensionalen Eingangsgrößen 110 gemeinsam.

Für mehrere Zwischenwerte wird z.B. je Zwischenwert eine Menge eine Information über den internen Betriebszustand abhängig von der wenigstens einen mehrdimensionalen Eingangsgröße aus der jeweiligen Menge bestimmt.

Beispielsweise werden mehrere Punktewolken, mehrere Linien oder mehrere Werte, insbesondere mehrere Volumina, Oberflächen, oder maximale Schnittkrümmungen bestimmt, die jeweils dem der Zwischenwerte zugeordnet sind, für den sie bestimmt wurden.

Das Verfahren umfasst einen Schritt 214.

Im Schritt 214 wird die Information über den internen Betriebszustand bereitgestellt.

Es kann vorgesehen sein, dass ein Benutzer das Verhalten des neuronalen Netzes einprägt, indem der Nutzer die Parameter des neuronalen Netzes 108 ändert.

Es kann vorgesehen sein, dass der Benutzer bestimmte Punkte in der graphischen Darstellung markiert.

Es kann vorgesehen sein, dass die markierten Punkt einem Optimierungsprozess hinzugefügt und die Parameter des neuronalen Netzes 108 mit diesen Punkten und Trainingsdaten neu justiert werden.

Es kann vorgesehen sein, die Schritt zu wiederholen, um die Information über den internen Betriebszustand für unterschiedliche Parametrierungen des neuronalen Netzes 108 bereitzustellen.

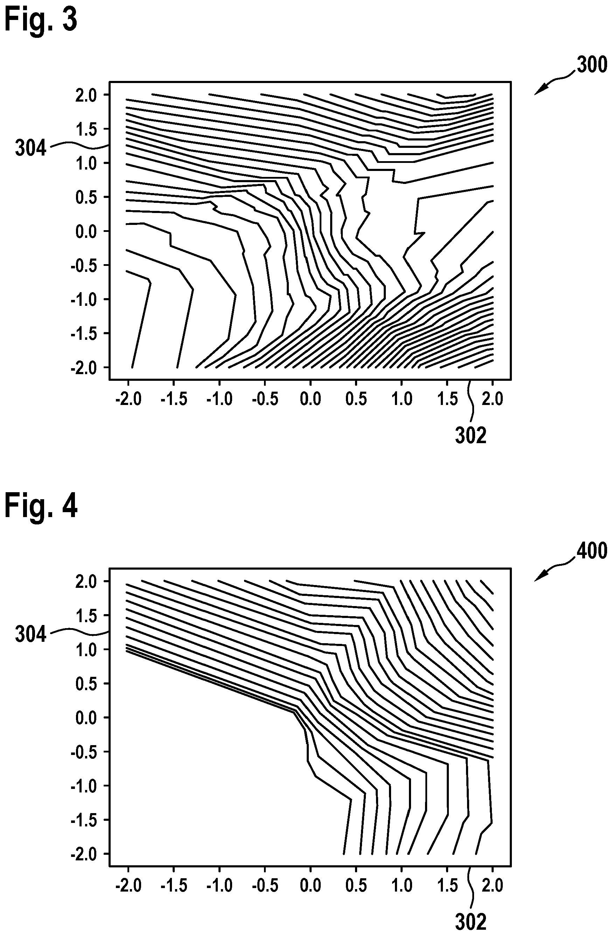

Figur 3 stellt eine graphische Darstellung 300 des internen Betriebszustandes abhängig von einer mehrdimensionalen Eingangsgröße, die eine ersten Eingangsgröße 302 und eine zweite Eingangsgröße 304 des technischen Systems 102 umfasst, dar.

Im Beispiel ist das technische System 102 ein Bagger. Im Beispiel repräsentiert die erste Eingangsgröße 302 eine Geschwindigkeit eines Auslegers des Baggers. Im Beispiel repräsentiert die zweite Eingangsgröße 304 eine Beschleunigung des Auslegers. Die Eingangsgrößen weisen im Beispiel Werte zwischen - 2.0 und 2.0 auf.

Das neuronale Netz 108 umfasst im Beispiel vier Schichten. Die Eingangsschicht umfasst im Beispiel zwei Neuronen. Die Ausgangsschicht umfasst im Beispiel ein Neuron. Zwischen der Eingangsschicht und der Ausgangsschicht ist im Beispiel eine Schicht mit 16 Neuronen gefolgt von einer Schicht mit 13 Neuronen angeordnet. Das bedeutet, die vorletzte Schicht umfasst 13 Neuronen. Im Beispiel sind repräsentiert je eines der 13 Neuronen je ein Merkmal.

Im Beispiel wird mit dem Verfahren abhängig von der mehrdimensionalen Eingangsgröße, d.h. abhängig von der ersten Eingangsgrößen 302 und der zweiten Eingangsgröße 304, mehrere Zwischenwerte vorgegeben und eine Linie je Zwischenwert bestimmt und in der graphischen Darstellung 300 dargestellt.

Figur 4 stellt eine graphische Darstellung 400 eines Beitrags einer ersten internen Größe des technischen Systems 102 zum internen Betriebszustand vor einer Anpassung eines Verhaltens des technischen Systems 102

**EP 4 629 138 A1**

schematisch dar. Die erste interne Größe wird im Beispiel vom 12-ten Neuron der vorletzten Schicht ausgegeben.

Im Beispiel werden mit dem Verfahren abhängig von der mehrdimensionalen Eingangsgröße, d.h. abhängig von der ersten Eingangsgrößen 302 und der zweiten Eingangsgröße 304, mehrere Zwischenwerte vorgegeben und eine Linie je Zwischenwert bestimmt und in der graphischen Darstellung 400 des Beitrags der ersten internen Größe dargestellt.

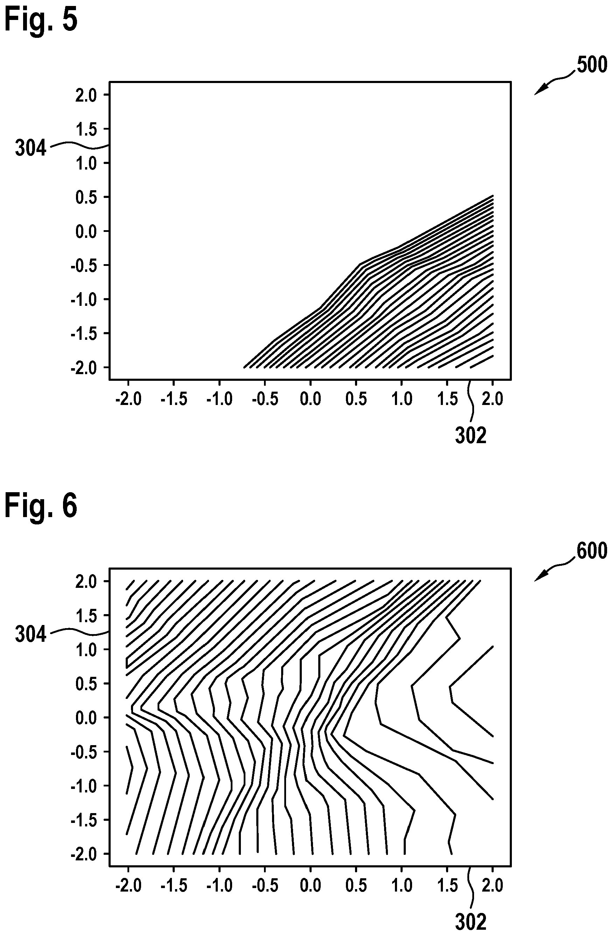

Figur 5 stellt eine graphische Darstellung 500 eines Beitrags einer zweiten internen Größe des technischen Systems 102 zum internen Betriebszustand vor einer Anpassung eines Verhaltens des technischen Systems 102 schematisch dar. Die zweite interne Größe wird im Beispiel vom 13-ten Neuron der vorletzten Schicht ausgegeben.

Im Beispiel werden mit dem Verfahren abhängig von der mehrdimensionalen Eingangsgröße, d.h. abhängig von der ersten Eingangsgrößen 302 und der zweiten Eingangsgröße 304, mehrere Zwischenwerte vorgegeben und eine Linie je Zwischenwert bestimmt und in der graphischen Darstellung 500 des Beitrags der zweiten internen Größe dargestellt.

Figur 6 stellt eine graphische Darstellung 600 eines Beitrags einer dritten internen Größe des technischen Systems 102 zum internen Betriebszustand vor einer Anpassung eines Verhaltens des technischen Systems 102 schematisch dar. Die dritte interne Größe wird im Beispiel vom 11-ten Neuron der vorletzten Schicht ausgegeben.

Im Beispiel werden mit dem Verfahren abhängig von der mehrdimensionalen Eingangsgröße, d.h. abhängig von der ersten Eingangsgrößen 302 und der zweiten Eingangsgröße 304, mehrere Zwischenwerte vorgegeben und eine Linie je Zwischenwert bestimmt und in der graphischen Darstellung 600 des Beitrags der dritten internen Größe dargestellt.

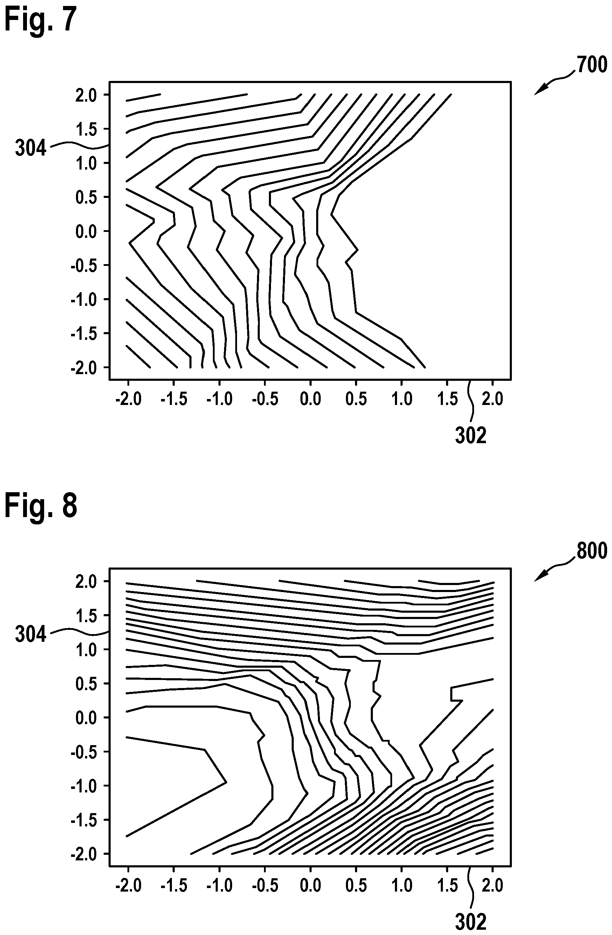

Figur 7 stellt eine graphische Darstellung 600 eines Beitrags einer vierten internen Größe des technischen Systems 102 zum internen Betriebszustand vor einer Anpassung eines Verhaltens des technischen Systems 102 schematisch dar. Die vierte interne Größe wird im Beispiel vom 1-ten Neuron der vorletzten Schicht ausgegeben.

Im Beispiel werden mit dem Verfahren abhängig von der mehrdimensionalen Eingangsgröße, d.h. abhängig von der ersten Eingangsgrößen 302 und der zweiten Eingangsgröße 304, mehrere Zwischenwerte vorgegeben und eine Linie je Zwischenwert bestimmt und in der graphischen Darstellung 700 des Beitrags der vierten internen Größe dargestellt.

Figur 8 stellt eine beispielhafte graphische Darstellung 800 eines Beitrags der ersten internen Größe zum internen Betriebszustand nach der Anpassung mit einem ersten Faktor schematisch dar.

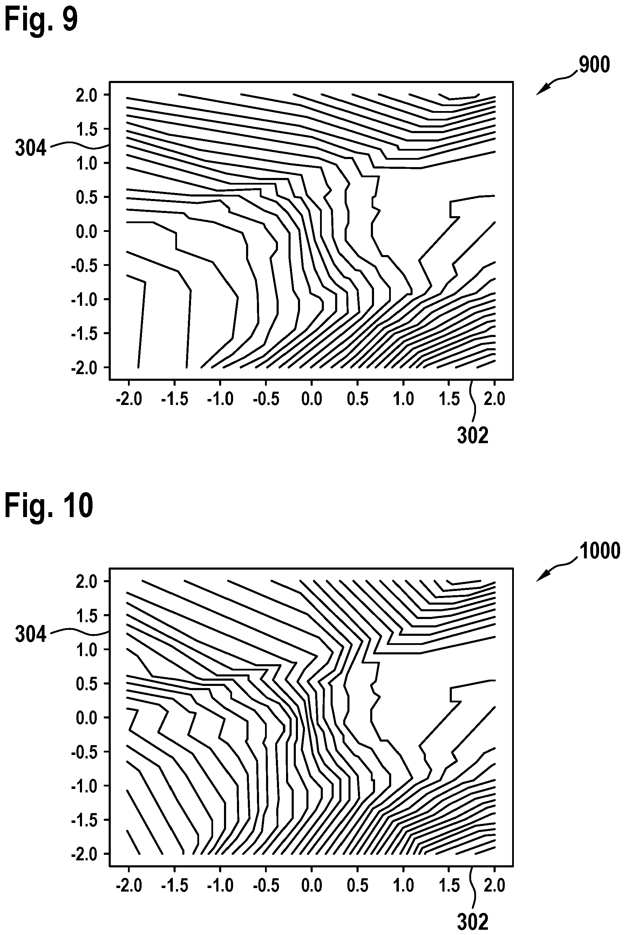

Figur 9 stellt eine beispielhafte graphische Darstellung 900 eines Beitrags der ersten internen Größe zum internen Betriebszustand nach der Anpassung mit einem zweiten Faktor schematisch dar.

Figur 1000 stellt eine beispielhafte graphische Darstellung 1000 eines Beitrags der ersten internen Größe zum internen Betriebszustand nach der Anpassung mit einem dritten Faktor schematisch dar.

## Patentansprüche

1. Computerimplementiertes Verfahren zum Bereitstellen (214) von Information über einen internen Betriebszustand eines technischen Systems (102), **dadurch gekennzeichnet, dass** das technische System (102) ein neuronales Netz (108) umfasst, wobei das neuronale Netz (108) eine Eingangsschicht zum Empfang der mehrdimensionalen Eingangsgröße (110) aus einem Eingangsraum und eine Schicht zum Ausgeben einer Größe, insbesondere der Ausgangsgröße des neuronalen Netzes (108) oder eines Merkmals einer vorletzten Schicht des neuronalen Netzes (108), umfasst, wobei das neuronale Netz (108) dazu eingerichtet ist, die mehrdimensionale Eingangsgröße (110) auf die Größe abzubilden, wobei das Verfahren ein Bestimmen (204) von wenigstens einem Punkt im Eingangsraum umfasst, der vom neuronalen Netz (108) auf einen maximalen Wert der Größe abgebildet wird, wobei das Verfahren ein Bestimmen (206) von wenigstens einem Punkt im Eingangsraum umfasst, der vom neuronalen Netz (108) auf einen minimalen Wert der Größe abgebildet wird, wobei ein Zwischenwert der Größe bereitgestellt wird (208), der größer als der minimale Wert und kleiner als der maximale Wert der Größe ist, wobei eine Menge bestimmt wird (210), die wenigstens eine mehrdimensionale Eingangsgröße (110) des neuronalen Netzes (108), die das neuronale Netz (108) auf den Zwischenwert abbildet, umfasst, und wobei die Information über den internen Betriebszustand, insbesondere zur Anpassung eines Verhaltens des neuronalen Netzes (108), abhängig von der wenigstens einen mehrdimensionalen Eingangsgröße (110) aus der Menge bestimmt wird (212).

2. Verfahren nach Anspruch 1, **dadurch gekennzeichnet, dass** das neuronale Netz (108) dazu eingerichtet ist, eine Klassifikation einer Betriebsgröße des technischen Systems (102) durchzuführen, wobei die mehrdimensionale Eingangsgröße (110) wenigstens einen Wert der Betriebsgröße umfasst oder repräsentiert, und wobei die Ausgangsgröße das Ergebnis der Klassifikation der Betriebsgröße umfasst, oder wobei das neuronale Netz (108) dazu eingerichtet ist, eine Klassifikation eines Sensorsignals durchzuführen, wobei die mehrdimensionale Eingangsgröße (110) wenigstens einen Wert des Sensorsignals umfasst oder repräsentiert, und wobei die Ausgangsgröße das Ergebnis der Klassifikation des Sensorsignals umfasst, oder wobei das neuronale Netz (108) dazu eingerichtet ist, basierend auf einer Betriebsgröße des technischen Systems (102) eine Regression durchzuführen, wobei die mehrdimensionale Eingangsgröße (110) wenigstens einen Wert der Betriebsgröße umfasst oder repräsentiert, wobei die Ausgangsgröße des neuronalen Netzes (108) das Ergebnis der Regression umfasst, oder wobei das neuronale Netz (108) dazu eingerichtet ist, basierend auf einem Sensorsignal eine Regression durchzuführen, wobei die mehrdimensionale Eingangsgröße (110) wenigstens einen Wert des Sensorsignals umfasst oder repräsentiert, wobei die Ausgangsgröße des neuronalen Netzes (108) das Ergebnis der Regression umfasst.

3. Verfahren nach Anspruch 2, **dadurch gekennzeichnet, dass** die Betriebsgrö-βe oder das Sensorsignal empfangen oder von einem Sensor (112) erfasst wird (202).

4. Verfahren nach Anspruch 2 oder 3, **dadurch gekennzeichnet, dass** die Betriebsgröße oder das Sensorsignal eine Geschwindigkeit, eine Drehrate, eine Temperatur, eine Stromstärke, eine Stromspannung, einen Druck, einen Luftdruck, eine Verformung, einen Fluss einer Flüssigkeit oder eines Gases, oder eine Zusammensetzung eines Gases, oder eine Änderung einer Geschwindigkeit, einer Drehrate, einer Temperatur, einer Stromstärke, einer Stromspannung, eines Drucks, eines Luftdrucks, einer Verformung, eines Flusses einer Flüssigkeit oder eines Gases, oder einer Zusammensetzung eines Gases charakterisiert.

5. Verfahren nach einem der vorherigen Ansprüche, **dadurch gekennzeichnet, dass** das technische System (102) abhängig von einer Ausgangsgröße des neuronalen Netzes (108), die das neuronale Netz (108) für eine mehrdimensionale Eingangsgröße (110) ausgibt, gesteuert wird (202).

6. Verfahren nach einem der vorherigen Ansprüche, **dadurch gekennzeichnet, dass** abhängig von der wenigstens einen mehrdimensionalen Eingangsgrö-βe aus der Menge eine graphische Darstellung des internen Betriebszustandes bestimmt wird (212).

7. Verfahren nach Anspruch 6, **dadurch gekennzeichnet, dass** abhängig von mehreren der mehrdimensionalen Eingangsgröße (110) aus der Menge eine Punktemenge bestimmt wird (212), die in der graphischen Darstellung die mehreren mehrdimensionalen Eingangsgrößen, die das neuronale Netz (108) auf den Zwischenwert abbildet, repräsentiert.

8. Verfahren nach Anspruch 6 oder 7, **dadurch gekennzeichnet, dass** abhängig von mehreren der mehrdimensionalen Eingangsgröße (110) aus der Menge eine Linie bestimmt wird (212), die in der graphischen Darstellung Punkte verbindet, die die mehreren mehrdimensionalen Eingangsgrößen repräsentieren, die das neuronale Netz (108) auf den Zwischenwert abbildet.

9. Verfahren nach einem der vorherigen Ansprüche, **dadurch gekennzeichnet, dass** abhängig von mehreren der mehrdimensionalen Eingangsgrößen (110) aus der Menge ein Wert zur Darstellung des internen Betriebszustandes bestimmt wird (212), insbesondere ein Volumen, eine Oberfläche, oder eine maximale Schnittkrümmung.

10. Verfahren nach einem der vorherigen Ansprüche, **dadurch gekennzeichnet, dass** mehrere Zwischenwerte vorgegeben und je Zwischenwert eine Menge bestimmt wird (210), die jeweils wenigstens eine mehrdimensionale Eingangsgröße umfassen, die das neuronale Netz (108) auf den jeweiligen Zwischenwert abbildet, wobei je Menge eine Information über den internen Betriebszustand, insbesondere zur Anpassung eines Verhaltens des Netzes, abhängig von der wenigstens einen mehrdimensionalen Eingangsgröße aus der jeweiligen Menge bestimmt wird (212).

11. Vorrichtung (100) zum Bereitstellen von Information über einen internen Betriebszustand eines technischen Systems (102), **dadurch gekennzeichnet, dass** die Vorrichtung (100) wenigsten einen Prozessor (104) und wenigstens einen Speicher (106), insbesondere wenigstens einen nicht-flüchtigen Speicher, umfasst, wobei der wenigstens eine Speicher (106) vom wenigstens einen Prozessor (104) ausführbare Instruktionen umfasst, bei deren Ausführung durch den wenigstens einen Prozessor (104) die Vorrichtung (100) das Verfahren nach einem der vorherigen Ansprüche ausführt.

**Geänderte Patentansprüche gemäss Regel 137(2) EPÜ.**

1. Computerimplementiertes Verfahren zum Bereitstellen (214) von Information über einen internen Betriebszustand eines technischen Systems (102), **dadurch gekennzeichnet, dass** das technische System (102) ein neuronales Netz (108) umfasst, wobei das neuronale Netz (108) eine Eingangsschicht zum Empfang der mehrdimensionalen Eingangsgröße (110) aus einem Eingangsraum und eine Schicht zum Ausgeben einer Größe, insbesondere der Ausgangsgröße des neuronalen Netzes (108) oder eines Merkmals einer vorletzten Schicht des neuronalen Netzes (108), umfasst, wobei das neuronale Netz (108) dazu eingerichtet ist, die mehrdimensionale Eingangsgröße (110) auf

EP 4 629 138 A1

die Größe abzubilden, wobei das Verfahren ein Bestimmen (204) von wenigstens einem Punkt im Eingangsraum umfasst, der vom neuronalen Netz (108) auf einen maximalen Wert der Größe abgebildet wird, wobei das Verfahren ein Bestimmen (206) von wenigstens einem Punkt im Eingangsraum umfasst, der vom neuronalen Netz (108) auf einen minimalen Wert der Größe abgebildet wird, wobei ein Zwischenwert der Größe bereitgestellt wird (208), der größer als der minimale Wert und kleiner als der maximale Wert der Größe ist, wobei eine Menge bestimmt wird (210), die wenigstens eine mehrdimensionale Eingangsgröße (110) des neuronalen Netzes (108), die das neuronale Netz (108) auf den Zwischenwert abbildet, umfasst, und wobei die Information über den internen Betriebszustand zur Anpassung eines Verhaltens des neuronalen Netzes (108) abhängig von der wenigstens einen mehrdimensionalen Eingangsgröße (110) aus der Menge bestimmt wird (212).

2. Verfahren nach Anspruch 1, **dadurch gekennzeichnet, dass** das neuronale Netz (108) dazu eingerichtet ist, eine Klassifikation einer Betriebsgröße des technischen Systems (102) durchzuführen, wobei die mehrdimensionale Eingangsgröße (110) wenigstens einen Wert der Betriebsgröße umfasst oder repräsentiert, und wobei die Ausgangsgröße das Ergebnis der Klassifikation der Betriebsgröße umfasst, oder wobei das neuronale Netz (108) dazu eingerichtet ist, eine Klassifikation eines Sensorsignals durchzuführen, wobei die mehrdimensionale Eingangsgröße (110) wenigstens einen Wert des Sensorsignals umfasst oder repräsentiert, und wobei die Ausgangsgröße das Ergebnis der Klassifikation des Sensorsignals umfasst, oder wobei das neuronale Netz (108) dazu eingerichtet ist, basierend auf einer Betriebsgröße des technischen Systems (102) eine Regression durchzuführen, wobei die mehrdimensionale Eingangsgröße (110) wenigstens einen Wert der Betriebsgröße umfasst oder repräsentiert, wobei die Ausgangsgröße des neuronalen Netzes (108) das Ergebnis der Regression umfasst, oder wobei das neuronale Netz (108) dazu eingerichtet ist, basierend auf einem Sensorsignal eine Regression durchzuführen, wobei die mehrdimensionale Eingangsgröße (110) wenigstens einen Wert des Sensorsignals umfasst oder repräsentiert, wobei die Ausgangsgröße des neuronalen Netzes (108) das Ergebnis der Regression umfasst.

3. Verfahren nach Anspruch 2, **dadurch gekennzeichnet, dass** die Betriebsgröße oder das Sensorsignal empfangen oder von einem Sensor (112) erfasst wird (202).

4. Verfahren nach Anspruch 2 oder 3, **dadurch gekennzeichnet, dass** die Betriebsgröße oder das Sensorsignal eine Geschwindigkeit, eine Drehrate, eine Temperatur, eine Stromstärke, eine Stromspannung, einen Druck, einen Luftdruck, eine Verformung, einen Fluss einer Flüssigkeit oder eines Gases, oder eine Zusammensetzung eines Gases, oder eine Änderung einer Geschwindigkeit, einer Drehrate, einer Temperatur, einer Stromstärke, einer Stromspannung, eines Drucks, eines Luftdrucks, einer Verformung, eines Flusses einer Flüssigkeit oder eines Gases, oder einer Zusammensetzung eines Gases charakterisiert.

5. Verfahren nach einem der vorherigen Ansprüche, **dadurch gekennzeichnet, dass** das technische System (102) abhängig von einer Ausgangsgröße des neuronalen Netzes (108), die das neuronale Netz (108) für eine mehrdimensionale Eingangsgröße (110) ausgibt, gesteuert wird (202).

6. Verfahren nach einem der vorherigen Ansprüche, **dadurch gekennzeichnet, dass** abhängig von der wenigstens einen mehrdimensionalen Eingangsgröße aus der Menge eine graphische Darstellung des internen Betriebszustandes bestimmt wird (212).

7. Verfahren nach Anspruch 6, **dadurch gekennzeichnet, dass** abhängig von mehreren der mehrdimensionalen Eingangsgröße (110) aus der Menge eine Punktemenge bestimmt wird (212), die in der graphischen Darstellung die mehreren mehrdimensionalen Eingangsgrößen, die das neuronale Netz (108) auf den Zwischenwert abbildet, repräsentiert.

8. Verfahren nach Anspruch 6 oder 7, **dadurch gekennzeichnet, dass** abhängig von mehreren der mehrdimensionalen Eingangsgröße (110) aus der Menge eine Linie bestimmt wird (212), die in der graphischen Darstellung Punkte verbindet, die die mehreren mehrdimensionalen Eingangsgrößen repräsentieren, die das neuronale Netz (108) auf den Zwischenwert abbildet.

9. Verfahren nach einem der vorherigen Ansprüche, **dadurch gekennzeichnet, dass** abhängig von mehreren der mehrdimensionalen Eingangsgrößen (110) aus der Menge ein Wert zur Darstellung des internen Betriebszustandes bestimmt wird (212), insbesondere ein Volumen, eine Oberfläche, oder eine maximale Schnittkrümmung.

10. Verfahren nach einem der vorherigen Ansprüche, **dadurch gekennzeichnet, dass** mehrere Zwischenwerte vorgegeben und je Zwischenwert eine Menge bestimmt wird (210), die jeweils wenigstens eine mehrdimensionale Eingangsgröße umfassen, die das neuronale Netz (108) auf den jeweiligen Zwischenwert abbildet, wobei je Menge eine Information über den internen Betriebszustand, insbesondere zur Anpassung eines Verhaltens des Netzes, abhängig von der wenigstens einen mehrdimensionalen Eingangsgröße aus der jeweiligen Menge bestimmt wird (212).

11. Vorrichtung (100) zum Bereitstellen von Information über einen internen Betriebszustand eines technischen Systems (102), **dadurch gekennzeichnet, dass** die Vorrichtung (100) wenigsten einen Prozessor (104) und wenigstens einen Speicher (106), insbesondere wenigstens einen nicht-flüchtigen Speicher, umfasst, wobei der wenigstens eine Speicher (106) vom wenigstens einen Prozessor (104) ausführbare Instruktionen umfasst, bei deren Ausführung durch den wenigstens einen Prozessor (104) die Vorrichtung (100) das Verfahren nach einem der vorherigen Ansprüche ausführt.

Fig. 1

EP 4 629 138 A1

# Fig. 2

Fig. 3

Fig. 4

## Fig. 5

## Fig. 6

## Fig. 7

700

304

302

## Fig. 8

800

304

302

Fig. 9

900

304

302

Fig. 10

1000

304

302

Europäisches Patentamt
European Patent Office
Office européen des brevets

# EUROPÄISCHER RECHERCHENBERICHT

Nummer der Anmeldung

EP 24 16 8797

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CHAUKAIR MUSTAFA ET AL: "On the Activation Space of ReLU equipped Deep Neural Networks", PROCEDIA COMPUTER SCIENCE, [Online] Bd. 222, 31. August 2023 (2023-08-31), Seiten 624-635, XP093207782, AMSTERDAM, NL ISSN: 1877-0509, DOI: 10.1016/j.procs.2023.08.200 Gefunden im Internet: URL:https://www.sciencedirect.com/science/article/pii/S1877050923009651> [gefunden am 2024-09-23] * Zusammenfassung * * Seite 625 - Seite 635 * ----- | 1-11 | INV. G06N3/0499 G06N5/045 |
| A | Huang Xinquan ET AL: "NeuralStagger: Accelerating Physics-constrained Neural PDE Solver with Spatial-temporal Decomposition", , 27. Mai 2023 (2023-05-27), XP093207623, Gefunden im Internet: URL:https://arxiv.org/pdf/2302.10255 [gefunden am 2024-09-24] * das ganze Dokument * ----- | 1-11 | |
| A | MAGAI GERMAN: "Deep Neural Networks Architectures from the Perspective of Manifold Learning", 2023 IEEE 6TH INTERNATIONAL CONFERENCE ON PATTERN RECOGNITION AND ARTIFICIAL INTELLIGENCE (PRAI), IEEE, 18. August 2023 (2023-08-18), Seiten 1021-1031, XP034482005, DOI: 10.1109/PRAI59366.2023.10331992 [gefunden am 2023-12-04] * das ganze Dokument * ----- | 1-11 | |

RECHERCHIERTE SACHGEBIETE (IPC)

G06N

Der vorliegende Recherchenbericht wurde für alle Patentansprüche erstellt

| Recherchenort | Abschlußdatum der Recherche | Prüfer |
|---|---|---|
| Den Haag | 25. September 2024 | Tsakonas, Athanasios |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................................................................
& : Mitglied der gleichen Patentfamilie, übereinstimmendes Dokument

EPO FORM 1503 03.82 (P04C03)